# EUROPEAN PATENT SPECIFICATION

(11) **EP 2 493 810 B1**
(45) Date of publication and mention of the grant of the patent: **26.11.2014**
(21) Application number: 10816305.6
(22) Date of filing: 29.10.2010
(51) Int. Cl.: C01B 11/02

(54) **PROCESS FOR THE PRODUCTION OF CHLORINE DIOXIDE**
VERFAHREN ZUR HERSTELLUNG VON CHLORDIOXID
PROCÉDÉ DE PRODUCTION DE DIOXYDE DE CHLORE

(30) Priority: 30.10.2009 FI 20096126
(43) Date of publication of application: 05.09.2012
(73) Proprietor: Kemira OYJ, 00180 Helsinki (FI)
(72) Inventor: POHJANVESI, Seppo, FIN-90570 Oulu (FI)
(74) Representative: Boco IP Oy Ab
(86) International application number: PCT/IB2010/002980
(87) International publication number: WO 2011/051809

(56) References cited:
- EP-A1- 0 366 636
- GB-A- 2 156 796
- US-A- 2 881 052
- US-A- 3 895 100
- US-A- 4 780 304
- US-A- 4 904 461

## Description

### FIELD OF THE INVENTION

The invention relates to a process for the production of chlorine dioxide. Specifically, the invention relates to a process for the production of chlorine dioxide, wherein sulphuric acid is efficiently mixed into the reaction mixture.

### BACKGROUND OF THE INVENTION

Chlorine dioxide (ClO₂) is an important pulp bleaching chemical. It is also used for many other purposes, for instance water purification. Chlorine dioxide is most often prepared by reducing sodium chlorate (or other alkali metal chlorates) in acidic conditions, and the generated gaseous chlorine dioxide is collected from the reaction mixture. Usually, sulphuric acid is used as the acid. The reducing agent can comprise for instance hydrogen peroxide, methanol, a chloride ion, or sulphur dioxide. The preparation of chlorine dioxide often takes place at a pulp mill.

Chlorine dioxide can be prepared by several different methods. As far as their basic functions are concerned, all the processes used for preparing chlorine dioxide comprise at least the following steps:
- The raw materials of chlorine dioxide, i.e. the aqueous alkali metal chlorate solution, the acid and the reducing agent, are led into a reactor.
- The chlorine dioxide-forming reaction takes place in the reactor.
- Chlorine dioxide gas is led away from the reactor.

Solvay and Mathieson processes are outdated processes for producing chlorine dioxide, and these operate at atmospheric pressure. The processes are largely similar, with the exception that methanol is in the Solvay process used as the reducing agent instead of sulphur dioxide. The HP-A^{®} process also operates at atmospheric pressure. In this process, sodium chlorate reacts with a hydrogen peroxide-based reducing agent in a sulphuric acid solution, whereby chlorine dioxide is formed. By-products of the reaction include oxygen and waste acid containing sodium bisulphate. US 2,881,052 also discloses an outdated process operating at atmospheric pressure.

Other well-known chlorine dioxide production processes comprise the ERCO processes. The ERCO R2^{®} process is an example of a process that operates at atmospheric pressure. In the ERCO R2^{®} process, sodium chloride is used for reducing sodium chlorate. The mixture of chlorate and chloride is added to the generator together with sulphuric acid. In this process, a large amount of chlorine gas (Cl₂) is formed, which is usually absorbed in order to form hypochlorite (NaClO).

At present, a low-pressure reactor is most often used in the process. One example is the ERCO R3^{®} process. In this process, sodium chlorate, sodium chloride and sulphuric acid react in fairly acidic conditions in a temperature that corresponds to the boiling point of the reaction mixture. Chlorine dioxide is produced in the process, and (crystalline) sodium sulphate and a small amount of chlorine (in water in hypochlorite form) are created as by-products. The chlorine dioxide is removed from the reaction equipment together with vapour and sodium sulphate precipitate. This process is described in more detail for instance in US 3,864,456, in which the sulphuric acid and the other reactants are fed directly into the reaction vessel.

Another known production process that operates in reduced pressure is the ERCO R8^{®} process. This process differs from the R3 process especially in that the process operates in much more acidic conditions, and methanol is used as the reducing agent instead of sodium chloride. In addition, the process does not require the use of a catalyst. As a result, cleaner chlorine dioxide is formed as methanol reduces the generated chlorine to chloride ions, thereby increasing the efficiency of the process. The R8 process is described for instance in US 4,081,520, US 4,393,035, and US 4,393,036. US 5,066,477 discloses one modification of the R8 process. In this modification, an attempt is made to speed up the reaction and to reduce the acidity of the sodium sulphate by-product by placing a short pipe in the venturi throat of the recirculation line and feeding sulphuric acid and methanol through this pipe. In the process according to US 5,066,477, the sulphuric acid and methanol are always fed after the heat exchanger.

US 3 895 100 discloses a process for preparation of chlorine dioxide in a reactor comprising sodium chlorate, sodium chloride and sulphuric acid maintained at reduced pressure. Part of the solution of sodium chlorate and sodium chloride containing some unremoved sodium sulphate is recycled to the reactor via a boiler-heat exchanger. Sulphuric acid is added to the recycled liquid downstream of the boiler-heat exchanger.

One drawback relating to the outdated processes, which operated at normal pressure and in which for example sulphur dioxide was used as the reducing agent and sulphuric acid as the acid, consisted of the large amounts of waste acid. Later on, sulphuric dioxide was gradually replaced with chloride-based compounds or methanol. However, chloride-based processes often produce chlorine as a by-product. In an attempt to eliminate the chlorine, processes have been developed in which no large amount of waste acids or chlorine are produced. After the use of the old processes, the aim of the chlorine dioxide industry has been to develop processes in which the operating costs are low and only a minimal amount of by-products is produced. The modern equipment solutions are thus very different from the equipment used in the previous production processes, and for instance the feed and the mixing of chemicals have been solved in a new way. Although the processes have improved and many of the drawbacks have been removed, there are still problems relating to these processes.

One of the problems related to the above-mentioned processes is the so-called puffing, where the produced chlorine dioxide breaks down explosively into oxygen and chlorine in the reaction mixture. This results in a temporary stop in production and the lowering of the cost-effectiveness of the production. The problem may be caused by impurities or an overly high temperature. Inadequate mixing of sulphuric acid is a common cause for the generation of local hot spots. These hot spots cause the explosive breaking down of chlorine dioxide, i.e. puffing. Previous attempts to solve this problem have included for instance replacing the strong sulphuric acid by weaker sulphuric acid. However, the use of weaker sulphuric acid considerably increases energy consumption, meaning that this solution is not financially profitable. The problem of puffing is described for instance in US 4,780,304. Therein, a process is disclosed in which an attempt has been made to solve the problem by adding sulphuric acid in atomized form in a carrier gas, so that the sulphuric acid is transformed into a fine mist. However, this solution requires an additional step that makes the equipment more complicated.

Another problem is disclosed in WO 2006/062455 A1, where hydrogen peroxide is used as the reducing agent. It has been found that hydrogen peroxide and sulphuric acid react in the reaction mixture, forming peroxomonosulphuric acid (H₂SO₅), which in the reaction conditions of the process easily reacts further for example with hydrogen peroxide. An attempt has been made to solve this problem by feeding the hydrogen peroxide directly into the reaction vessel or by placing the feed point at a specific distance after the sulphuric acid feed point. According to the said WO publication, sulphuric acid is preferably fed after the heat exchanger.

### BRIEF DESCRIPTION OF THE INVENTION

Therefore, the object of the invention is to provide a process by which the above-mentioned puffing problem can be solved or at least significantly reduced. Specifically, the object of the invention is to provide a process by which sulphuric acid, one of the main chemicals needed in the process, can be efficiently mixed into the reaction mixture without the use of special mixing devices. The objects of the invention can be reached by a process which is characterized in the features disclosed in the independent claim. The preferred embodiments of the invention have been disclosed in the dependent claims.

Therefore, the object of the invention is a process for the production of chlorine dioxide with an apparatus comprising a reaction vessel 1 operating in reduced pressure. Alkali metal chlorate is reduced in acidic conditions in the reaction vessel 1 and the formed chlorine dioxide is removed from the reaction vessel 1 and recovered. The reaction vessel 1 is equipped with a recirculation line 2 of the reaction mixture, comprising a circulation pump 3 and, downstream after the pump, a heat exchanger 4. The process is characterized in that sulphuric acid is used as the acid, and the acid is fed into the recirculation line 2 before the said circulation pump, or into the circulation pump 3.

The invention is based on the observation that the explosive breaking down of chlorine dioxide (puffing) can be reduced by mixing the fed sulphuric acid faster and more evenly into the reaction mixture.

This can be accomplished by moving the sulphuric acid feed point 6 so that it is located upstream of the circulation pump or at the circulation pump 3. In this way, the circulation pump 3 contributes to even and rapid mixing of the sulphuric acid into the reaction mixture. Conventionally, the sulphuric acid feed point 6 has been located in the recirculation line downstream after the heat exchanger 4, because this has been considered to be the most advantageous solution in regard to energy efficiency.

### BRIEF DESCRIPTION OF THE DRAWINGS

In the following, the invention is described in more detail by referring to the attached drawings, in which:

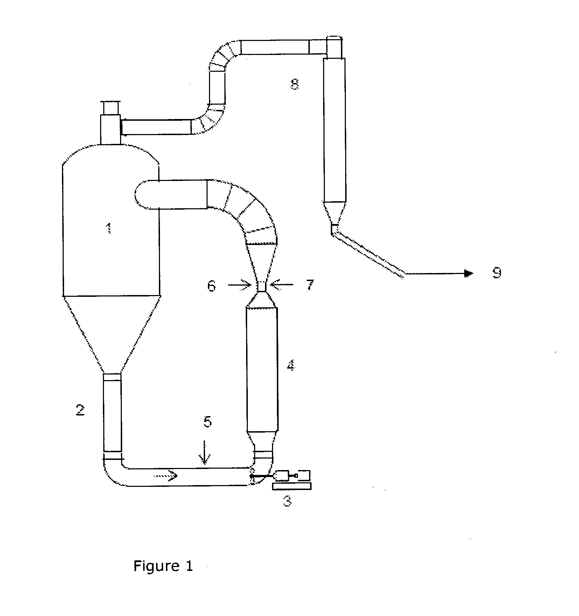

Fig. 1 shows the equipment according to prior art,
Fig. 2 shows one type of equipment that can be used in the process according to the invention,
Fig. 3 shows one type of equipment that can be used in the process according to the invention, where sulphuric acid and alkali metal chlorate are mixed before they are fed into the recirculation line.

### DETAILED DESCRIPTION OF THE INVENTION

In this patent application, the term "puffing" refers to the phenomenon in which chlorine dioxide breaks down into oxygen and chlorine in an explosive manner during the chlorine dioxide production process. The phenomenon may be caused by impurities in the reaction mixture or an overly high local temperature ("hot spots").

The term "reaction mixture" refers to a mixture comprising alkali metal chlorate, water, sulphuric acid and reducing agent. Usually the reaction mixture also contains chlorine dioxide and alkali metal salt. Chlorine dioxide and the alkali metal salt produced as a by-product are removed from the said reaction mixture. At least, aqueous alkali metal chlorate solution, sulphuric acid and reducing agent are fed into the spent reaction mixture. Thus, the composition of the reaction mixture varies in different process steps.

The present invention relates to a process for the production of chlorine dioxide with an apparatus comprising a reaction vessel 1 operating in reduced pressure. Usually, the reaction vessel 1 has the shape of a round cylinder and it is equipped with a conical bottom. The dimensions of the reaction vessel 1 have been so selected that reaction efficiency is optimized and the separation of liquid and gas improved. Alkali metal chlorate is reduced by using a reducing agent in acidic conditions in the reaction vessel 1, and the formed chlorine dioxide is removed from the reaction vessel 1 and recovered by using recovery means 9. The reaction vessel 1 is equipped with a recirculation line 2 of the reaction mixture, comprising a circulation pump 3, and downstream after the pump, a heat exchanger 4. The recirculation line 2 runs from the lower part of the reaction vessel 1 to the upper part thereof, and the raw materials, i.e. the aqueous alkali metal chlorate solution, the acid and the reducing agent, are led into the reaction vessel 1 from the upper part of the reaction vessel 1. In the process according to the invention, sulphuric acid is used as the acid, and the acid is fed into the recirculation line 2 before the said circulation pump, or into the circulation pump 3. Because of the feed point, the circulation pump 3 contributes to even and rapid mixing of the sulphuric acid into the reaction mixture. Because of the even mixing, the generation of local hot spots is reduced, which in turn reduces the problem caused by puffing.

The parts of the apparatus used in the process according to the invention, such as the reaction vessel 1, recirculation line 2, circulation pump 3 and heat exchanger 4, are preferably made of titanium or coated with titanium, because the reaction mixture is corrosive, making it necessary to use corrosion-resistant material.

In the process according to the invention, the reduction of the alkali metal chlorate to chlorine dioxide takes place in the reaction vessel 1, where the reaction mixture containing alkali metal chlorate, sulphuric acid and reducing agent reacts forming chlorine dioxide and a by-product, alkali metal salt. The reaction mixture is circulated in the recirculation line 2, which comprises an alkali metal chlorate feed point 5, a sulphuric acid feed point 6, and a reducing agent feed point 7. The recirculation line runs from the lower part of the reaction vessel to the upper part thereof, where the reaction mixture is fed back into the reaction vessel 1. The circulation pump 3 circulates the reaction mixture through the heat exchanger 3. The heat exchanger preferably comprises a tube heat exchanger, which has a small pressure loss and is suitable for liquids that contain solids. The gas leaving the reaction vessel is a mixture of chlorine dioxide and water vapour. The mixture is cooled by the cooler 8 and the chlorine dioxide is absorbed in water, which is usually cooled in order to obtain a better solubility. The chloride dioxide solution is recovered by recovery means 9 and usually stored in storage tanks. The alkali metal salt crystals that form in the reaction vessel are usually recovered by filtering. The process is typically continuous.

In a preferred embodiment of the invention, the sulphuric acid is fed trough the sulphuric acid feed point 6 into the recirculation line 2 after the alkali metal chlorate feed 5, whereby the feed can be well integrated into the process, enabling the efficient mixing of sulphuric acid into the reaction mixture. The sulphuric acid feed point 6 may also be located upstream of the alkali metal chlorate feed point 5. The alkali metal chlorate and sulphuric acid can also be mixed together before feeding them into the recirculation line 2.

In a preferred embodiment, the sulphuric acid is fed into the recirculation line 0 to 2 metres before the circulation pump 3, because this is the best way to integrate the feed into the process, enabling the efficient mixing of the sulphuric acid into the reaction mixture.

The alkali metal chlorate preferably comprises sodium chlorate, which is a raw material that can be easily obtained, and the most inexpensive of the chlorates.

The reducing agent for reducing the alkali metal chlorate preferably comprises methanol, which is the most inexpensive alternative. Other possible reducing agents include for instance hydrogen peroxide (H₂O₂) and hydrochloric acid (HCl).

In a preferred embodiment according to the invention, the circulation pump 3 used in the process is an axial propeller pump, which is compact, gentle to the crystals and suitable for low lifting heights. The circulation pump may also be a centrifugal pump.

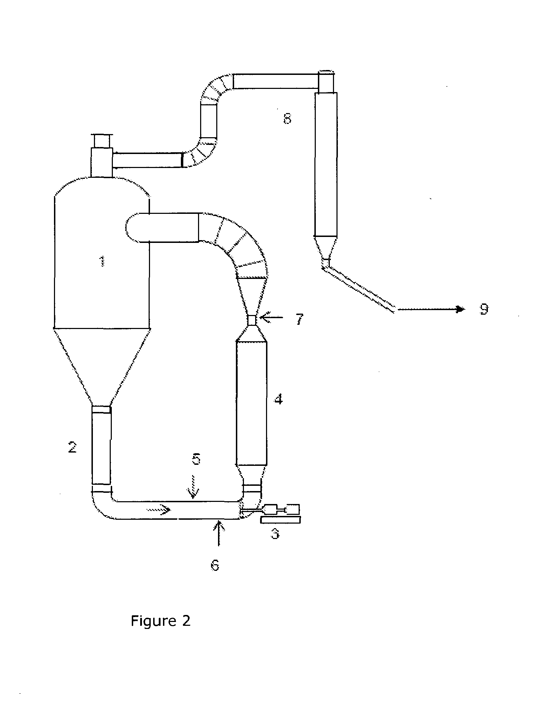

Fig. 2 shows one type of apparatus suitable for use in the process according to the invention, the apparatus comprising a reaction vessel 1, a recirculation line 2, a circulation pump 3, a heat exchanger 4, an alkali metal chlorate feed point 5, a sulphuric acid feed point 6, a reducing agent feed point 7, a gas cooler 8 and recovery means 9. In Fig. 2, sulphuric acid is fed into the recirculation line 2 after the alkali metal chlorate feed 5 and before the circulation pump 3.

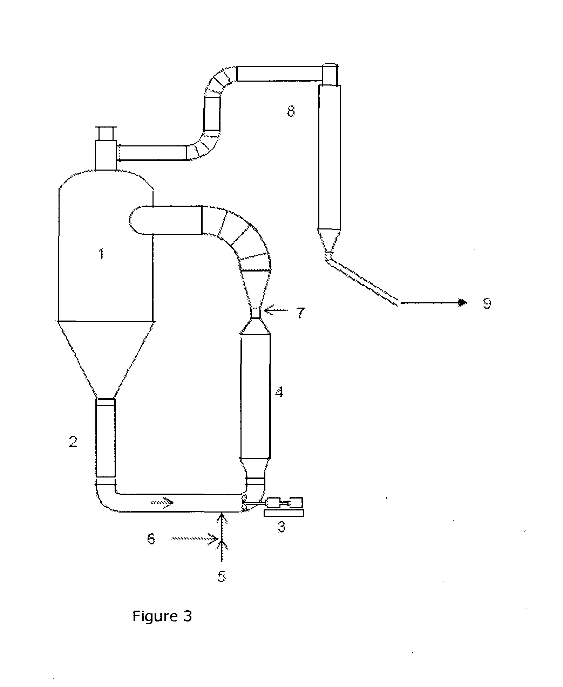

Fig. 3 shows one type of apparatus suitable for use in the process according to the invention, the apparatus comprising a reaction vessel 1, a recirculation line 2, a circulation pump 3, a heat exchanger 4, an alkali metal chlorate feed point 5, a sulphuric acid feed point 6, a reducing agent feed point 7, a gas cooler 8 and recovery means 9. In Fig. 3, the sulphuric acid and alkali metal chlorate are mixed before they are fed into the recirculation line 2. The common feed point is in Fig. 3 located before the circulation pump 3.

In a preferred embodiment, the concentration of the fed sulphuric acid is between about 60% and about 100% by weight, and more preferably between about 90% and about 98% by weight. The use of dilute sulphuric acid increases energy consumption and diminishes financial profitability, and for this reason the use of strong sulphuric acid is preferable.

Absolute pressure in the reaction vessel 1 is preferably between about 5 kPa and about 50 kPa, for example 10 kPa, 15 kPa, 20 kPa, 25 kPa, 30 kPa, 35 kPa, 40 kPa, 45 kPa, 50 kPa, or 55 kPa, in which case the pressure variation may be ±5 kPa, more preferably from about 6 kPa to about 50 kPa, and most preferably from about 13 kPa to about 25 kPa. In a preferred embodiment of the invention, the reaction temperature is between about 50°C and about 100°C, for example 55°C, 60°C, 65°C, 70°C, 75°C, 80°C, 85°C, 90°C, or 95°C, in which case the temperature variation may be ±5°C, most preferably between about 70°C and about 80°C.

The inventive method was simulated by performing CFD calculations. The abbreviation CFD stands for "Computational Fluid Dynamics", meaning computational or numerical fluid flow mechanics. CFD calculations are used for predicting the behaviour of fluids by numerical methods and algorithms. Based on the calculations, comparisons were performed between the mixing of sulphuric acid into the reaction mixture when it was fed into the reaction mixture before the circulation pump and when it was fed into the reaction mixture after the heat exchanger. When sulphuric acid is fed after the heat exchanger, i.e. into the standpipe of the recirculation line, the calculations show that the sulphuric acid concentration is locally higher in the upper part of the reactor and at some points in the upper turn of the standpipe. The local high sulphuric acid concentration causes the temperature to rise ("hot spots"), which leads to the puffing problem, i.e. the explosive breaking down of chlorine dioxide. At the same time, there are still areas in the standpipe and the upper part of the reactor where the sulphuric acid concentration is low or almost non-existent. The local low concentration lowers the reaction speed, since the formation of chlorine dioxide requires the presence of sulphuric acid.

The CFD calculations therefore show that sulphuric acid is mixed considerably faster and more evenly into the reaction mixture if it is fed into the recirculation line before the circulation pump.

## Claims

1. A process for the production of chlorine dioxide with an apparatus comprising a reaction vessel (1) operating in reduced pressure, wherein alkali metal chlorate is reduced by using a reducing agent in acidic conditions and the formed chlorine dioxide is removed from the reaction vessel (1) and recovered, the reaction vessel (1) being equipped with a recirculation line (2) of the reaction mixture, comprising a circulation pump (3) and, downstream after said pump, a heat exchanger (4), **characterized in that** the absolute pressure in the reaction vessel (1) is from 6 kPa to 50 kPa and sulphuric acid is used as the acid, and said acid is fed into the recirculation line (2) before the said circulation pump or into the circulation pump (3).

2. The process according to claim 1, **characterized in that** the sulphuric acid is fed into the recirculation line (2) after the alkali metal chlorate feed (5).

3. The process according to claim 1, **characterized in that** the alkali metal chlorate and the sulphuric acid are mixed together before they are fed into the recirculation line (2).

4. The process according any one of the preceding claims, **characterized in that** the sulphuric acid is fed into the recirculation line (2) 0 to 2 metres before the circulation pump (3).

5. The process according any one of the preceding claims, **characterized in that** the alkali metal chlorate is sodium chlorate.

6. The process according any one of the preceding claims, **characterized in that** the reducing agent for reducing the alkali metal chlorate is methanol.

7. The process according any one of the preceding claims, **characterized in that** the circulation pump (3) is an axial propeller pump.

8. The process according any one of claims 1 to 6, **characterized in that** the circulation pump (3) is a centrifugal pump.

9. The process according any one of the preceding claims, **characterized in that the** concentration of the fed sulphuric acid is from 60% to 100% by weight, preferably from 90% to 98% by weight.

10. The process according any one of the preceding claims, **characterized in that** the absolute pressure in the reaction vessel (1) is from 13 kPa to 25 kPa.

11. The process according any one of the preceding claims, **characterized in that** the reaction temperature is between 50°C and 100°C, preferably between 70°C and 80°C.

## Patentansprüche

1. Verfahren zum Herstellen von Chlordioxid mit einer Vorrichtung, die ein Reaktionsgefäß (1) umfasst, welches unter Unterdruck betrieben wird, wobei Alkalimetallchlorat unter Einsatz eines Reduktionsmittels unter sauren Umgebungsbedingungen reduziert wird und das gebildete Chlordioxid aus dem Reaktionsgefäß (1) entfernt und aufgefangen wird, wobei das Reaktionsgefäß (1) mit einer Rückführleitung (2) für das Reaktionsgemisch versehen ist, welche eine Umwälzpumpe (3) und, stromabwärts von der Pumpe, einen Wärmetauscher (4) umfasst, **gekennzeichnet dadurch, dass** der absolute Druck im Reaktionsgefäß (1) zwischen 6 kPa und 50 kPa beträgt, dass Schwefelsäure als Säure eingesetzt wird und dass die Säure entweder vor der Umwälzpumpe in die Rückführleitung (2) oder in die Umwälzpumpe (3) geleitet wird.

2. Verfahren nach Anspruch 1, **dadurch gekennzeichnet, dass** die Schwefelsäure nach der Alkalimetallchlorat-Zuführung (5) in die Rückführleitung (2) geleitet wird.

3. Verfahren nach Anspruch 1, **dadurch gekennzeichnet, dass** das Alkalimetallchlorat und die Schwefelsäure miteinander vermischt werden, bevor sie in die Rückführleitung (2) geleitet werden.

4. Verfahren nach einem der vorhergehenden Ansprüche, **dadurch gekennzeichnet, dass** die Schwefelsäure 0 bis 2 m vor der Umwälzpumpe (3) in die Rückführleitung (2) geleitet wird.

5. Verfahren nach einem der vorhergehenden Ansprüche, **dadurch gekennzeichnet, dass** das Alkalimetallchlorat Natriumchlorat ist.

6. Verfahren nach einem der vorhergehenden Ansprüche, **dadurch gekennzeichnet, dass** das Reduktionsmittel für die Reduktion des Alkalimetallchlorats Methanol ist.

7. Verfahren nach einem der vorhergehenden Ansprüche, **dadurch gekennzeichnet, dass** die Umwälzpumpe (3) eine axiale Propellerpumpe ist.

8. Verfahren nach einem der Ansprüche 1 bis 6, **dadurch gekennzeichnet, dass** die Umwälzpumpe (3) eine Kreiselpumpe ist.

9. Verfahren nach einem der vorhergehenden Ansprüche, **dadurch gekennzeichnet, dass** die Konzentration der eingespeisten Schwefelsäure zwischen 60 Gew.-% und 100 Gew.-%, vorzugsweise zwischen 90 Gew.-% und 98 Gew.-% liegt.

10. Verfahren nach einem der vorhergehenden Ansprüche, **dadurch gekennzeichnet, dass** der absolute Druck im Reaktionsgefäß (1) zwischen 13 kPa und 25 kPa liegt.

11. Verfahren nach einem der vorhergehenden Ansprüche, **dadurch gekennzeichnet, dass** die Reaktionstemperatur zwischen 50 °C und 100 °C, vorzugsweise zwischen 70 °C und 80 °C liegt.

## Revendications

1. Procédé pour la production de dioxyde de chlore avec un appareil comprenant un récipient de réaction (1) qui travaille sous pression réduite, dans lequel on soumet du chlorate de métal alcalin à une réduction en utilisant un agent de réduction dans des conditions acides et on élimine du récipient de réaction (1) le dioxyde de chlore obtenu et on le récupère, le récipient de réaction (1) étant équipé d'un conduit de remise en circulation (2) du mélange réactionnel, comprenant une pompe de circulation (3) et, en aval après ladite pompe, un échangeur de chaleur (4), **caractérisé en ce que** la pression absolue régnant dans le récipient de réaction (1) s'élève de 6 kPa à 50 kPa, et **en ce qu'**on utilise comme acide de l'acide sulfurique, et ledit acide est alimenté dans le conduit de remise en circulation (2) avant ladite pompe de circulation ou dans la pompe de circulation (3).

2. Procédé selon la revendication 1, **caractérisé en ce que** l'acide sulfurique est alimenté dans le conduit de remise en circulation (2) après l'alimentation (5) du chlorate de métal alcalin.

3. Procédé selon la revendication 1, **caractérisé en ce qu'**on mélange l'un avec l'autre le chlorate de métal alcalin et l'acide sulfurique avant de les alimenter dans le conduit de remise en circulation (2).

4. Procédé selon l'une quelconque des revendications précédentes, **caractérisé en ce que** l'acide sulfurique est alimenté dans le conduit de remise en circulation (2) à une distance de 0 à 2 m avant la pompe de circulation (3).

5. Procédé selon l'une quelconque des revendications précédentes, **caractérisé en ce que** le chlorate de métal alcalin est le chlorate de sodium.

6. Procédé selon l'une quelconque des revendications précédentes, **caractérisé en ce que** l'agent de réduction pour la réduction du chlorate de métal alcalin est le méthanol.

7. Procédé selon l'une quelconque des revendications précédentes, **caractérisé en ce que** la pompe de circulation (3) est une pompe à hélice axiale.

8. Procédé selon l'une quelconque des revendications 1 à 6, **caractérisé en ce que** la pompe de circulation (3) est une pompe centrifuge.

9. Procédé selon l'une quelconque des revendications précédentes, **caractérisé en ce que** la concentration de l'acide sulfurique alimenté s'élève de 60 % à 100 % en poids, de préférence de 90 à 98 % en poids.

10. Procédé selon l'une quelconque des revendications précédentes, **caractérisé en ce que** la pression absolue régnant dans le récipient de réaction (1) s'élève de 13 kPa à 25 kPa.

11. Procédé selon l'une quelconque des revendications précédentes, **caractérisé en ce que** la température réactionnelle se situe entre 50 °C et 100 °C de préférence entre 70 °C et 80 °C.
